# EUROPÄISCHE PATENTSCHRIFT

(11) **EP 2 927 818 B1**
(45) Veröffentlichungstag und Bekanntmachung des Hinweises auf die Patenterteilung: **29.05.2019**
(21) Anmeldenummer: 14163510.2
(22) Anmeldetag: 04.04.2014
(51) Int. Cl.: G06F 17/30, G10L 15/22

(54) **VERFAHREN ZUR AUTOMATISCHEN VERARBEITUNG EINER ANZAHL VON PROTOKOLLDATEIEN EINES AUTOMATISIERUNGSSYSTEMS**
METHOD FOR AUTOMATICALLY PROCESSING A NUMBER OF PROTOCOL FILES OF AN AUTOMATION SYSTEM
PROCÉDÉ DE TRAITEMENT AUTOMATIQUE DE PLUSIEURS FICHIERS JOURNAUX D'UN SYSTÈME D'AUTOMATISATION

(43) Veröffentlichungstag der Anmeldung: 07.10.2015
(73) Patentinhaber: Siemens Aktiengesellschaft, 80333 München (DE)
(72) Erfinder: Storl, Alexander, 91077 Hetzles (DE); Pauer, Steffen, 91781 Weißenburg (DE); Roshchin, Mikhail, 85622 Feldkirchen (DE)

(56) Entgegenhaltungen:
- WO-A1-00/39674
- WO-A1-2006/112999
- ZHAO H ET AL: "Entity identification for heterogeneous database integration-a multiple classifier system approach and empirical evaluation", INFORMATION SYSTEMS, PERGAMON PRESS, OXFORD, GB, Bd. 30, Nr. 2, 1. April 2005 (2005-04-01), Seiten 119-132, XP027844352, ISSN: 0306-4379 [gefunden am 2005-04-01]
- Hp: "From bigdata toknowledge:value chainfor CSPs", Hp , 28. Februar 2013 (2013-02-28), XP002729180, Gefunden im Internet: URL:http://www.vertica.com/wp-content/uplo ads/2013/02/From-Big-Data-to-Knowledge-Val ue-Chain-for-CSPs-4AA4-3407ENW1.pdf [gefunden am 2014-09-01]

## Beschreibung

Die Erfindung betrifft ein Verfahren zur automatischen Verarbeitung einer Vielzahl von Protokolldateien eines Automatisierungssystems einer technischen Anlage, wie einer Kraftwerksanlage.

Großtechnische Anlagen, wie Dampf- und Gasturbinenanlagen, chemische Anlagen, Stahlwerke, Walzwerke, sind komplexe technische Systeme, die eine Vielzahl von (z. B. mehreren hundert) Komponenten, wie Sensoren, Aktoren, Antriebe etc., aufweisen, von denen jeder gegebenenfalls mehrere Messwerte pro Sekunde zur weiteren Verarbeitung und Übertragung erfasst und bereitstellt.

Zur Überwachung und Steuerung von Komponenten, wie Turbine, Verdampfer, Generator, Sensoren, Antriebe, Aktoren der technischen Anlage, werden die von den Komponenten erhaltenen Daten verarbeitet, analysiert und interpretiert. So ist es möglich, Abweichungen von einem vorgegebenen Normalzustand so früh wie möglich zu erkennen und gegebenenfalls eine Beschädigung und/oder einen Ausfall der Komponente, wie der Turbine, zu verhindern.

Hierbei ist die Menge an auszuwertenden Daten/Messsignalen und die Komplexität möglicher Abhängigkeiten zwischen den Daten/Messsignalen üblicherweise viel zu groß, als dass eine wirksame Analyse der Daten/Messsignalen von einer Bedienperson möglich wäre.

Die technische Anlage umfasst dabei zur Steuerung und Überwachung der Anlage ein Automatisierungssystem, das im Allgemeinen in eine Bedien- und Beobachtungsebene, eine Automatisierungs-/Prozessebene und eine Feldebene unterteilt ist, die über eine Kommunikationseinheit, insbesondere einen oder mehrere Datenbussysteme, miteinander verbunden sind.

Die Daten, wie Messsignale, Zustandssignale einzelner Komponenten, wie Sensoren, Aktoren, Antriebe, Turbine, Automatisierungseinheiten etc., werden üblicherweise in Protokolldateien zusammengefasst, die ein oder mehrere aufgetretene Ereignisse einer oder mehrerer Komponenten und/oder Komponentengruppen beschreiben, und an betreffende Komponenten der technischen Anlage übertragen. Das Patent WO00/39674A1 offenbart einen Event Manager und einen Event Korrelator und die Ermittlung von Event-Korrelationen.

In der Praxis automatischer Steuerung und/oder Überwachung gibt es das Problem der steigenden Anzahl von generierten Protokolldateien bei Auftreten eines Ereignisses in der technischen Anlage, zum Beispiel bei Auftreten eines Störfalls. Typische Ursachen hierfür sind z.B. defekte Sensoren und/oder defekte Anlagenteile, die zusätzliche Messwerte und somit zusätzliche Protokolldateien liefern. Dies erschwert dem Bedienpersonal die Übersichtlichkeit und die Erfassbarkeit der generierten Protokolldateien. Zudem ist es schwierig für das Bedienpersonal, das aufgetretene Ereignis richtig zu beurteilen.

Darüber hinaus werden eine Vielzahl von verschiedenartigen Protokolldateien generiert, deren Inhalte nicht kompatibel und nicht vergleichbar sind.

Die Aufgabe der Erfindung besteht darin, ein einfaches Verfahren zur automatischen Verarbeitung einer Vielzahl von Protokolldateien eines Automatisierungssystems einer technischen Anlage anzugeben.

Diese Aufgabe wird gemäß den Merkmalen der unabhängigen Patentansprüche gelöst. Bevorzugte Ausführungsformen sind insbesondere den abhängigen Patentansprüchen entnehmbar.

Beispielsweise werden für in einem Datensatz enthaltene Sonderzeichen oder nicht-numerische oder nicht-alphabetische Zeichen automatisch Leerzeichen eingesetzt, wobei bei daraus resultierenden zwei oder mehreren, aufeinanderfolgenden Leerzeichen eine über ein einzelnes Leerzeichen hinausgehende Anzahl von aufeinanderfolgenden Leerzeichen aus dem Datensatz entfernt wird. Hierdurch werden jene Zeichen im Nachrichtenteil (beispielsweise Textteil, Meldungsteil, Zustandsteil) der Protokolldatei, die das Ereignis nicht näher beschreiben, wie Sonderzeichen, beispielsweise "*", "+", "§", "#" etc., aus diesem Nachrichtenteil entfernt und somit der Nachrichtenteil vom Systemteil (beispielsweise Systemzeit, Version, Revision) der Protokolldatei extrahiert. Somit wird die Analyse der Protokolldatei auf den inhaltsrelevanten Nachrichtenteil begrenzt und damit deutlich vereinfacht und beschleunigt.

Des Weiteren wird die Verkettung der Inhalte des jeweiligen Datensatzes aufgelöst, so dass die Inhalte wieder separiert sind. Insbesondere werden die Inhalte dabei in Worte unterteilt. Die aus der Auflösung der Verkettung resultierenden separaten alphanumerischen Inhalte, insbesondere Worte, mit weniger als vier Zeichen werden zur Reduzierung der weiter zu verarbeitenden Zeichen/Daten und somit zur Datenkomprimierung entfernt. Worte mit weniger als vier Zeichen sind bei der Analyse vernachlässigbar, da diese für nachfolgende Ähnlichkeitsberechnungen nur ein "statistisches Rauschen" darstellen und somit nicht relevant sind.

Eine mögliche Ausführungsform der Kodierung sieht vor, dass die Datensätze, insbesondere deren separate alphanumerische Inhalte derart analysiert und vereinheitlicht werden, dass jedem separaten alphanumerischen Inhalt ein Referenzwort und jedem Referenzwort ein numerischer Kode zugeordnet werden. Alternativ zum numerischen Kode kann ein alphabetischer Kode und/oder ein alphanumerischer Kode verwendet werden. Der numerische Kode hat den Vorteil einer einfachen und schnellen Sortierung und Gruppierung der Datensätze der Protokolldateien.

Zur weiteren Vereinheitlichung und Komprimierung der Datensätze von verschiedenen Protokolldateien und einfachen und schnellen Analyse dieser Datensätze wird die Summendatei mit den separaten alphanumerischen Inhalten aller Protokolldateien anhand der ermittelten Referenzwörter und/oder des/der numerischen Kode/s in eine zweidimensionale, insbesondere alphanumerische Kode-Matrix umgewandelt.

In einer besonders einfachen Ausführungsform werden die numerischen Kodes der zweidimensionalen Kode-Matrix chronologisch und/oder in Abhängigkeit von der jeweiligen Zeichenlänge sortiert. Dabei können ähnliche numerische Kodes der Kode-Matrix mittels einer Ähnlichkeitsoperation, insbesondere der so genannten Levenshtein-Distanz, gruppiert werden, insbesondere mindestens einer Gruppe zugeordnet werden. Dabei wird jede Gruppe durch einen zugehörigen Gruppen-Kode beschrieben oder repräsentiert.

So kann bei einer ermittelten Levenshtein-Distanz von Null für einen neu zu betrachtenden numerischen Kode zu einer der Gruppen dieser zu betrachtende numerische Kode dieser einen Gruppe zugeordnet werden, da der zu betrachtende numerische Kode identisch ist mit der Gruppe, insbesondere mit dem diese Gruppe repräsentierenden Gruppen-Kode.

Hingegen wird bei einer Levenshtein-Distanz von eins für einen zu betrachtenden numerischen Kode zu einer der Gruppen und bei einer Unterscheidung des zu betrachtenden numerischen Kodes nur an einer Stelle zu dieser einen Gruppe dieser zu betrachtende numerische Kode dieser einen Gruppe zugeordnet.

Darüber hinaus kann jeder neu zu betrachtende numerische Kode mit nicht-gruppierten numerischen Kodes gleicher Länge oder mit einer größeren Länge von maximal einem Zeichen verglichen werden.

Für den Fall, dass die Levenshtein-Distanz eines neu zu betrachtenden numerischen Kodes zu einem anderen nicht-gruppierten numerischen Kode gleich eins ist, wird eine neue Gruppe mit einem neuen Gruppen-Kode aus beiden numerischen Kodes derart gebildet, dass
- bei einer unterschiedlichen Länge der beiden zu betrachtenden numerischen Kodes der neuen Gruppe der kürzere numerische Kode als neuer Gruppen-Kode zugeordnet wird oder
- bei gleicher Länge der beiden numerischen Kodes mit mindestens einem unterschiedlichen Zeichen der neuen Gruppe der numerischen Kode ohne das unterschiedliche Zeichen als neuer Gruppen-Kode zugeordnet wird.

Zusätzlich oder alternativ kann, wenn ein neu zu betrachtender numerischer Kode identifiziert wird, der nicht eine Levenshtein-Distanz von gleich eins zu einem anderen nichtgruppierten numerischen Kode aufweist, dieser zu betrachtende numerische Kode einer weiteren neuen Gruppe zugeordnet werden. Dabei wird dieser weiteren neuen Gruppe dieser neu zu betrachtende numerische Kode als neuer Gruppen-Kode zugeordnet. Zukünftige, neu zu betrachtende numerische Kodes, die bei Vergleich mit diesem neuen Gruppen-Kode eine Levenshtein-Distanz von eins aufweisen, werden dieser neuen Gruppe zugeordnet.

Somit kann die ermittelte zweidimensionale Kode-Matrix und die ermittelten Gruppen mit Gruppen-Kodes zur Gruppierung von ähnlichen und/oder identischen numerischen Kodes, die ein Ereignis beschreiben, durch Hinzufügen neuer numerischer Kodes neuer Datensätzen weiterer/neuer Protokolldateien fortlaufend in Art eines Expertensystems erweitert und ergänzt werden.

Darüber hinaus erlaubt das Verfahren, dass bei Start des Verfahrens nur eine vorgegebene Anzahl von Gruppen verwendet werden und keine neuen Gruppen generiert werden. Hierdurch wird zunächst eine robuste Gruppierung neu zu betrachtender numerischer Kodes ermöglicht. Im fortlaufenden Betrieb kann dann die Generierung von neuen Gruppen zugelassen werden.

Das beschriebene Verfahren zeichnet sich dadurch aus, dass die ursprünglich nicht kompatiblen und nicht vergleichbaren Nachrichtenteile der verschiedenartigen Protokolldateien durch die Verkettung aller Bestandteile im Originalzustand und anschließender Komprimierung dieser durch Zeichenreduzierung und Kodierung dieser reduzierten Zeichenkette sowie Gruppierung ähnlicher und/oder identischer kodierter Zeichenkette eine gegenüber herkömmlichen Analyseverfahren deutlich schneller sortiert und analysiert.

Vorzugsweise wird das Verfahren in einem Automatisierungssystem einer technischen Anlage, wie einer Kraftwerksanlage, verwendet.

In einer einfachen Ausführungsform ist das erfindungsgemäße Verfahren in einer Komponente eines Automatisierungssystems einer technischen Anlage implementiert, wobei das Automatisierungssystem mindestens eine Bedien- und Beobachtungsebene, eine Automatisierungs-/Prozess-Ebene und eine Feldebene, die miteinander über ein Kommunikationssystem verbunden sind, umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Ausführungsbeispiel für ein Automatisierungssystem zur Steuerung und Überwachung einer technischen Anlage, und
- FIG 2: schematisch ein Ausführungsbeispiel für ein Verfahren zur Verarbeitung von Protokolldateien, die im Automatisierungssystem generiert werden.

Einander entsprechende Teile sind in allen Figuren mit den gleichen Bezugszeichen versehen.

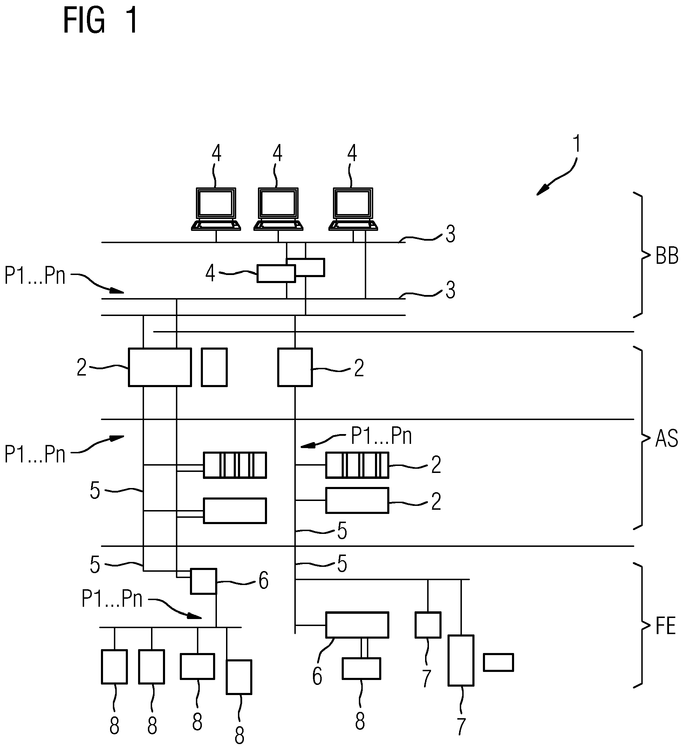

Figur 1 zeigt schematisch in Blockdarstellung ein Ausführungsbeispiel für ein Automatisierungssystem 1 einer technischen Anlage, wie einer Kraftwerksanlage oder einer Chemieanlage.

Das Automatisierungssystem 1 umfasst in einer Prozessebene AS (auch Automatisierungsebene genannt) eine Anzahl von Automatisierungsgeräten 2, die über einen gemeinsamen Datenbus 3 miteinander und mit einer Leiteinheit 4 in einer Bedien- und Beobachtungsebene BB verbunden sind und kommunizieren. Die Automatisierungsgeräte 2 sind darüber hinaus über einen Feldbus 5 mit Feldgeräten 6 in einer Feldebene FE verbunden und kommunizieren miteinander.

Der Datenbus 3 kann beispielsweise ein Ethernet-Bus oder eine andere geeignete Datenübertragungseinheit sein. Der Feldbus 5 kann beispielsweise ein Ethernet-basierter Feldbus 5 oder als eine andere geeignete Datenübertragungseinheit drahtlos oder drahtgebunden ausgebildet sein. Der Datenbus 3 und/oder der Feldbus 5 können dabei ein Computernetzwerk bilden.

Die Automatisierungsgeräte 2 können sowohl aus frei programmierbaren als auch aus speicherprogrammierbaren Prozessoren, insbesondere einer Prozessoreinheit, aufgebaut sein und steuern, regeln und/oder überwachen jeweils mehrere Komponentengruppen 7 oder Teilsysteme der einzelnen Anlagenteile der technischen Anlage. Insbesondere umfasst das Steuern, Regeln und/oder Überwachen der technischen Anlage auch eine Analyse und sonstige Verarbeitung der Daten, wie Messsignale, Steuersignale, Ein- und Ausgangssignale, Zwischensignale, gespeicherte Daten, Verarbeitungsdaten.

Die Leiteinheiten 4 können Datenverarbeitungseinheiten, wie ein Personalcomputer oder eine andere geeignete Bedien- und Beobachtungseinheit sein, mittels welcher die technische Anlage überwacht und gesteuert wird.

Die Feldgeräte 6 können beispielsweise kompakte frei programmierbare oder speicherprogrammierbare Steuerungen, insbesondere eine Prozessoreinheit und/oder zumindest eine teilweise festverdrahtete oder logische Schaltungsanordnung, sein, die einzelne Komponenten 8 von Anlagenteilen, wie Messfühler (Sensoren) und/oder Stellglieder (Aktoren), steuern, regeln und/oder überwachen und die über den Feldbus 5 zwecks Kommunikation mit dem Automatisierungsgerät 2 (auch Steuerungsgerät genannt) verbunden sind.

Beim Betrieb einer technischen Anlage, wie einer Kraftwerksanlage, werden über den Datenbus 3 und den Feldbus 5 große Datenmengen in Form von Protokolldateien P1 bis Pn, die Steuerbefehle, Zustandsmeldungen und/oder Störmeldungen umfassen, bewegt, die in der Leiteinheit 4 durch Steuereingriffe ausgelöst bzw. auf Bildschirmen oder anderen Sichtgeräten der Leiteinheit 4 sichtbar gemacht werden. Dabei sind, insbesondere bei Inbetriebnahme und beim An-/Abfahren der Anlage, eine Vielzahl von Steuereingriffen erforderlich, die eine entsprechend große Anzahl von zu beobachtenden Rückmeldungen zur Folge haben. Dies führt zu einer nicht unerheblichen Belastung des Bedienpersonals.

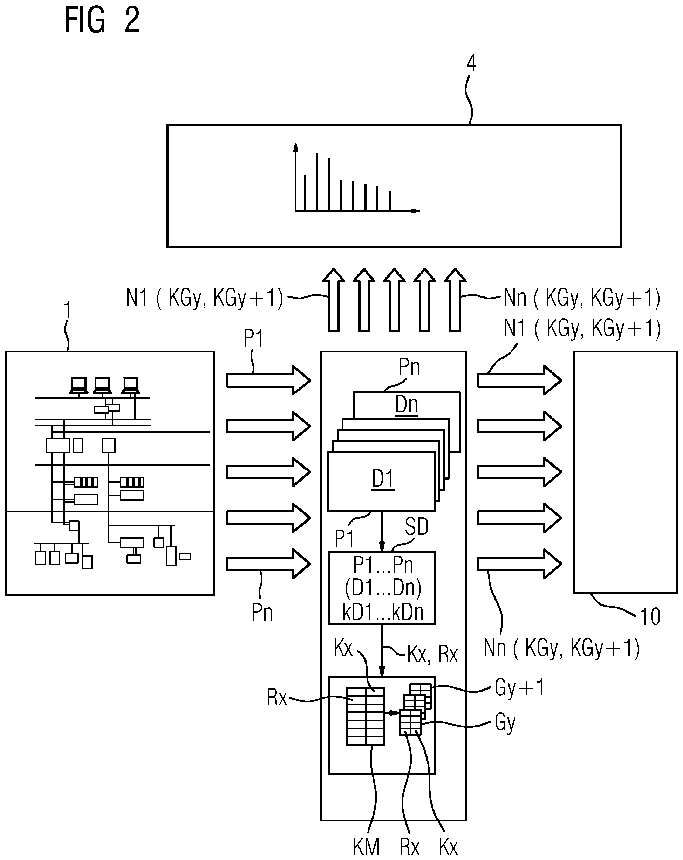

Figur 2 zeigt schematisch ein Ausführungsbeispiel für ein Verfahren zur Verarbeitung, insbesondere Vorverarbeitung, von Protokolldateien P1 bis Pn, die im Automatisierungssystem 1 generiert werden und über den Datenbus 3 und/oder den Feldbus 5 übertragen und zwischen den Einheiten des Automatisierungssystems 1, insbesondere zwischen den Leiteinheiten 4, den Automatisierungsgeräten 2 und den Feldgeräten 6, ausgetauscht werden.

Die Protokolldateien P1 bis Pn umfassen jeweils zumindest einen Erfassungs-Zeitstempel und einen Text, insbesondere eine Nachricht, eine Meldung, einen Zustandstext, welche mindestens ein Ereignis beschreiben. Zusätzlich können die Protokolldateien P1 bis Pn als Text eine Systemzeit, eine Versions-/Revisionsnummer und weitere Informationen umfassen. Dabei können beispielsweise mehrere Protokolldateien P1 bis Pn ein Ereignis oder mehrere Ereignisse beschreiben. Als Protokolldateien P1 bis Pn werden beispielsweise in einem Automatisierungssystem 1 einer technischen Anlage verschiedene *log-, *xml-, *txt-, *nfo- und/oder *dmp-Dateien erzeugt und generiert.

In zumindest einer der Komponenten des Automatisierungssystems 1 ist insbesondere ein Computerprogrammprodukt implementiert, das direkt in einen Speicher eines digitalen Computers, wie einer Leiteinheit 4, ladbar ist, umfassend Programmcodeteile, die dazu geeignet sind, Schritte des nachfolgend beschriebenen Verfahrens durchzuführen. Alternativ kann das Computerprogrammprodukt auch in ein Automatisierungsgerät 2 geladen werden.

Alternativ kann ein computerlesbares Speichermedium, z.B. ein beliebiger Speicher, vorgesehen sein, der von einem Computer, wie einer Leiteinheit 4, ausführbare Anweisungen (z.B. in Form von Programmcodes) umfasst, die dazu geeignet sind, dass die Leiteinheit 4 Schritte des nachfolgend beschriebenen Verfahrens durchführt.

Das als ein Protokollkomprimierer 9 implementiertes Verfahren zur automatischen Verarbeitung, insbesondere Vorverarbeitung der Vielzahl von generierten, insbesondere heterogenen oder inkompatiblen, Protokolldateien P1 bis Pn umfasst zumindest folgende Schritte:
- Ermitteln zumindest eines Nachrichtenteils N1 bis Nn eines jeden Datensatzes D1 bis Dn einer Protokolldatei P1 bis Pn durch:
- Verkettung aller Inhalte des jeweiligen Datensatzes D1 bis Dn der Protokolldatei P1 bis Pn,
- Zusammenfassen der Datensätze D1 bis Dn aller Protokolldateien P1 bis Pn in einer Summendatei SD,
- Chronologische Sortierung der Datensätze D1 bis Dn aller Protokolldateien P1 bis Pn in der Summendatei SD,
- Komprimieren eines jeden Datensatzes D1 bis Dn in der Summendatei SD,
- Kodieren der komprimierten Datensätze kD1 bis kDn in der Summendatei SD durch mindestens einen oder mehrere numerische Kode/s Kx,
- Sortieren und/oder Zuordnen, insbesondere Gruppieren, der komprimierten Datensätzen kD1 bis kDn anhand des/der ermittelten numerischen Kodes Kx zu mindestens einer Gruppe Gy, die mindestens einen zugehörigen Gruppen-Kode KGy aufweist, und
- Ausgeben des alphanumerischen Nachrichtenteils N1 bis Nn der Protokolldatei P1 bis Pn durch Dekodieren des Gruppen-Kodes KGy der zugeordneten Gruppe Gy und Ausgabe des dekodierten Gruppen-Kodes KGy.

Der Nachrichtenteil N1 bis Nn eines jeden Datensatzes D1 bis Dn der Protokolldateien P1 bis Pnumfasst beispielsweise Textnachrichten, wie Meldungen, Zustände, Texte, Informationen, Warnungen etc. Der jeweilige Datensatz D1 bis Dn kann beispielsweise die Form einer Tabelle oder einer Datenbank oder eine andere geeignete Form mit Feldunterteilungen aufweisen.

Der Nachrichtenteil N1 bis Nn der jeweiligen Protokolldatei P1 bis Pn kann beispielsweise in einem oder mehreren Feldern des zugehörigen Datensatzes D1 bis Dn enthalten sein. Weitere Felder des Datensatzes D1 bis Dn enthalten Protokoll- und/oder Systeminformationen, wie beispielsweise Systemzeit, Versionsnummer, Revisionsnummer etc.

Das erfindungsgemäße Verfahren sieht vor, dass die Inhalte der Felder des jeweiligen Datensatzes D1 bis Dn einer jeden Protokolldatei P1 bis Pn in einem ersten Schritt miteinander verkettet werden und anschließend alle verketteten Datensätze D1 bis Dn aller Protokolldateien P1 bis Pn in einer Summendatei SD, insbesondere einer einzelnen Tabelle oder Datenbank, zusammengefasst werden. Beispielsweise umfassen zwei Protokolldateien P1 und P2 folgende Inhalte oder Einträge:

**Protokolldatei P1:**

| | |
|---|---|
| 28.03.2014 | ABC |
| 21.03.2014 | ZDF |

**Protokolldatei P2:**

| | |
|---|---|
| 27.03.2014 | XYZ |
| 01.01.2014 | SAP |

Nach Verkettung und Zusammenfassen der Inhalte in der Summendatei SD umfasst diese die Inhalte wie folgt:

| | |
|---|---|
| 28.03.2014 | ABC |
| 27.03.2014 | XYZ |
| 21.03.2014 | ZDF |
| 01.01.2014 | SAP. |

Innerhalb dieser insbesondere tabellenförmigen Summendatei SD werden die Datensätze D1 bis Dn mit den verketteten Inhalten anhand eines jeweils zugehörigen Zeitstempels sortiert, insbesondere chronologisch sortiert, beispielsweise aufsteigend oder absteigend sortiert.

Bei dem zugehörigen Zeitstempel kann es sich insbesondere um einen Erfassungs-Zeitstempel für die zugrunde liegende Nachricht, die insbesondere ein Ereignis, wie "Umgebungstemperatur im zulässigen Bereich", "Erststart aktiviert", "Pumpe ausgefallen", "Turbine gestartet" etc., in der technischen Anlage beschreibt, handeln. Alternativ oder zusätzlich können die Datensätze D1 bis Dn anhand alternativer oder zusätzlicher Protokollparameter, wie Erfassungsort, Erfassungsart und/oder Erfassungszeitraum, sortiert werden.

Beim anschließenden Komprimieren der Datensätze D1 bis Dn mit den verketteten Inhalten werden diese derart verarbeitet, dass zumindest die Datenlänge und/oder der Dateninhalt des jeweiligen Datensatzes D1 bis Dn reduziert werden/wird.

Beispielsweise werden für in einem Datensatz D1 bis Dn enthaltene Sonderzeichen, wie zum Beispiel "§", "#", "@" etc. oder nicht-numerische oder nicht-alphabetische Zeichen, "-", "/", etc. automatisch Leerzeichen eingesetzt. Anschließend werden in der Inhaltskette des jeweiligen Datensatzes D1 bis Dn bei zwei oder mehreren, aufeinanderfolgenden Leerzeichen diese automatisch auf ein Leerzeichen durch Löschen/Entfernen der über ein einzelnes Leerzeichen hinausgehenden Anzahl von aufeinanderfolgenden Leerzeichen reduziert. Hierdurch werden jene Zeichen aus dem Datensatz D1 bis Dn, insbesondere aus dem Nachrichtenteil N1 bis Nn (beispielsweise Textteil, Meldungsteil, Zustandsteil) der Protokolldatei P1 bis Pn entfernt, die das Ereignis nicht näher beschreiben. Somit ist in einfacher Art und Weise der Nachrichtenteil N1 bis Nn vom Systemteil (beispielsweise Systemzeit, Version, Revision) der Protokolldatei P1 bis Pn extrahiert, so dass die weitere Verarbeitung und Analyse der Protokolldatei auf den inhaltsrelevanten Nachrichtenteil N1 bis Nn begrenzt und damit deutlich vereinfacht und beschleunigt wird.

In einem weiteren Schritt wird dann die Verkettung der Inhalte des Nachrichtenteils N1 bis Nn aufgelöst, wodurch die Inhalte, insbesondere Worte/Phrasen, separiert sind. Dabei werden die Inhalte beispielsweise in Worte/Phrasen unterteilt.

Zur weiteren Datenkomprimierung der Datensätze D1 bis Dn werden beispielsweise jene separaten Worte/Phrasen aus dem Datensatz D1 bis Dn entfernt, die weniger als vier, insbesondere weniger als drei Zeichen aufweisen. Beispielsweise wird das Wort "Ist" oder "Ja" gelöscht. Dies ermöglicht, einfach und effektiv zwei oder mehrere unterschiedliche Einträge/Inhalte miteinander syntaktisch (ohne semantische Bedeutung) und automatisch zu vergleichen.

Des Weiteren ist vorgesehen, dass die Datensätze D1 bis Dn, insbesondere deren separate alphanumerische Inhalte, wie die übrig gebliebenen separaten Wörter/Phrasen mit insbesondere mehr als drei Zeichen, derart analysiert und vereinheitlicht werden, dass jedem separaten alphanumerischen Inhalt ein Referenzwort Rx und jedem Referenzwort Rx ein numerischer Kode Kx zugeordnet werden. Hierdurch wird der Speicherbedarf zur Archivierung der Datensätze D1 bis Dn deutlich reduziert und deren Analyse deutlich beschleunigt.

Beispielsweise werden die Worte und/oder Phrasen der Nachrichteninhalte
- "Umgebungstemperatur im zulässigen Bereich",
- "Turbinentemperatur im grünen Bereich",
- "Erststart aktiviert",
- "Pumpe ausgefallen",
- "Turbine gestartet"
   in folgende Referenzworte Rx
- "Umgebungstemperatur ist zulässig",
- "Turbinentemperatur ist zulässig",
- "Erststart aktiviert",
- "Pumpenausfall",
- "Turbinenstart"
   und/oder in folgenden numerischen Kode Kx umgewandelt:
   - "123",
   - "423",
   - "56",
   - "7",
   - "8",

Dabei werden einzelne Worte beispielsweise mittels eines einstelligen numerischen Kodes Kx kodifiziert. Phrasen mit mehr als einem Wort werden beispielsweise mittels eines numerischen Kodes Kx kodifiziert, der eine der Anzahl der Worte entsprechenden Anzahl von Stellen aufweist. Identische Worte und/oder Phrasen werden mit dem gleichen Referenzwort Rx und dem gleichen numerischen Kode Kx kodifiziert. Worte und/oder Phrasen unterschiedlicher Datensätze D1 bis Dn mit teilweise übereinstimmenden Zeichen und/oder Worten werden mit zumindest an diesen Stellen übereinstimmenden numerischen Kode Kx kodifiziert.

Alternativ zum numerischen Kode Kx kann ein alphabetischer Kode und/oder ein alphanumerischer Kode verwendet werden. Die Kodierung der Datensätze D1 bis Dn mittels des numerischen Kodes Kx hat den Vorteil einer einfachen und schnellen Sortierung und Gruppierung der Datensätze D1 bis Dn der Protokolldateien P1 bis Pn.

Zur weiteren Vereinheitlichung und Komprimierung der Datensätze D1 bis Dn der verschiedenen Protokolldateien P1 bis Pn und einfachen und schnellen Analyse dieser Datensätze D1 bis Dn wird die tabellenförmige Summendatei SD mit den separaten alphanumerischen Inhalten aller Protokolldateien P1 bis Pn anhand der ermittelten Referenzwörter Rx und/oder des numerischen Kodes Kx in eine zweidimensionale, insbesondere alphanumerische Kode-Matrix KM umgewandelt.

In der zweidimensionalen Kode-Matrix KM werden dann die numerischen Kodes Kx chronologisch, insbesondere zeitlich auf- oder absteigend, und/oder in Abhängigkeit von der jeweiligen Zeichenlänge sortiert. Beispielsweise werden die numerischen Kodes Kx "5632", "543", "64221", "123" wie folgt sortiert: "123", "543", "5632", "64221".

Zusätzlich können in einem weiteren Schritt ähnliche numerische Kodes Kx der Kode-Matrix KM mittels einer Ähnlichkeitsoperation, insbesondere der so genannten Levenshtein-Distanz, gruppiert werden, insbesondere mindestens einer Gruppe Gy (= Cluster) zugeordnet werden.

Dabei wird jede Gruppe Gy durch einen zugehörigen Gruppen-Kode KGy beschrieben oder repräsentiert. Der zugehörige Gruppen-Kode KGy kann dabei aus zumindest dem numerischen Kode Kx eines ersten Datensatzes D1 bis Dn, der dieser Gruppe Gy zugeordnet wird, generiert werden. Alternativ kann der jeweilige Gruppen-Kode KGy einer oder mehrerer Gruppe/n Gy vorgegeben werden.

Beispielsweise kann bei einer ermittelten Levenshtein-Distanz von Null für einen neu zu betrachtenden numerischen Kode Kx zu einer der Gruppen Gy dieser zu betrachtende numerische Kode Kx dieser Gruppe Gy zugeordnet werden, da der zu betrachtende numerische Kode Kx identisch ist mit der Gruppe Gy, insbesondere mit dem diese Gruppe Gy repräsentierenden Gruppen-Kode KGy.

Hingegen wird bei einer Levenshtein-Distanz von eins für einen zu betrachtenden numerischen Kode Kx zu einer der Gruppen Gy und bei einer Unterscheidung des zu betrachtenden numerischen Kodes Kx nur an einer Stelle zu dieser einen Gruppe Gy dieser zu betrachtende numerische Kode Kx dieser einen Gruppe Gy zugeordnet. Beispielsweise werden bei einer Gruppe Gy mit einem zugehörigen Gruppen-Kode KGy von "12" dieser Gruppe Gy die numerischen Kodes Kx mit folgenden Stellen "123", "124", "12" und/oder "13" zugeordnet.

Um beispielsweise sowohl bei einer späteren Analyse als auch bei der Gruppierung der numerischen Kodes Kx Suchfunktionen zu verbessern und zu beschleunigen, wird der Vergleich der neu zu betrachtenden numerischen Kodes Kx mit den bereits generierten Gruppen Gy bei der zuletzt angelegten Gruppe Gy oder bei der Gruppe Gy gestartet, der zuletzt ein vorangegangener numerischer Kode Kx zugeordnet worden ist.

Insbesondere der Start für die Gruppierung oder Zuordnung eines neu zu betrachtenden numerischen Kodes Kx bei der Gruppe Gy, der ein vorangegangener numerischer Kode Kx zugeordnet worden ist, beschleunigt den Gruppierungsalgorithmus, da üblicherweise benachbarte, insbesondere zeitlich nachfolgende, aber auch zeitlich vorangegangene numerische Kodes Kx, die zuvor zeitlich sortiert worden sind, ein- und demselben Ereignis zugeordnet sind und somit ein- und derselben Gruppe Gy zuordenbar sind.

Darüber hinaus kann jeder neu generierte und somit neu zu betrachtende numerische Kode Kx mit nicht-gruppierten numerischen Kodes Kx gleicher Länge oder mit einer größeren Länge von maximal einem Zeichen verglichen werden.

Für den Fall, dass die Levenshtein-Distanz eines neu zu betrachtenden numerischen Kodes Kx zu einem anderen nichtgruppierten numerischen Kode Kx gleich eins ist, wird eine neue Gruppe Gy+1 mit einem neuen Gruppen-Kode KGy+1 aus beiden numerischen Kodes Kx derart gebildet, dass
- bei einer unterschiedlichen Länge der beiden zu betrachtenden numerischen Kodes Kx der neuen Gruppe Gy+1 der kürzere numerische Kode Kx als neuer Gruppen-Kode KGy+1 zugeordnet wird (zum Beispiel Kx = "123" und "12" führt zu einer neuen Gruppe Gy mit neuem Gruppen-Kode KGy+1 von "12") oder
- bei gleicher Länge der beiden numerischen Kodes Kx mit mindestens einem unterschiedlichen Zeichen der neuen Gruppe Gy+1 der numerischen Kode Kx ohne das unterschiedliche Zeichen als neuer Gruppen-Kode KGy+1 zugeordnet wird (zum Beispiel Kx = "133" und "134" führt zu einer neuen Gruppe Gy mit neuem Gruppen-Kode KGy+1 von "13").

Zusätzlich oder alternativ kann, wenn ein neu zu betrachtender numerischer Kode Kx identifiziert wird, der nicht eine Levenshtein-Distanz von gleich eins zu einem anderen nichtgruppierten numerischen Kode Kx aufweist, dieser zu betrachtende numerische Kode Kx einer weiteren neuen Gruppe Gy+1 zugeordnet werden. Dabei wird dieser weiteren neuen Gruppe Gy+1 dieser neu zu betrachtende numerische Kode Kx als Gruppen-Kode KGy+1 zugeordnet. Zukünftige, neu zu betrachtende numerische Kodes Kx, die bei Vergleich mit diesem neuen Gruppen-Kode KGy+1 eine Levneshtein-Distanz von eins aufweisen, werden dieser neuen Gruppe Gy+1 zugeordnet.

Die zweidimensionale Kode-Matrix KM stellt somit ein dynamisches Expertensystem dar, in welches die ermittelten Gruppen Gy, Gy+1 mit Gruppen-Kodes KGy, KGy+1 zur Gruppierung von ähnlichen und/oder identischen numerischen Kodes Kx, die ein Ereignis beschreiben, durch Hinzufügen neuer numerischer Kodes Kx neuer Datensätzen D1 bis Dn weiterer/neuer Protokolldateien P1 bis Pn fortlaufend erweitert und ergänzt werden.

Zur weiteren Verarbeitung des Inhalts des numerischen Kodes Kx und/oder des Gruppen-Kodes KGy, KGy+1 werden diese dekodiert und als alphanumerischer Nachrichtenteil N1 bis Nn der Protokolldatei P1 bis Pn ausgegeben und können beispielsweise in einem Speicher 10 hinterlegt werden.

Alternativ oder zusätzlich können diese dekodierten und den alphanumerischen Nachrichtenteil N1 bis Nn repräsentierenden numerischen Kodes Kx und Gruppen-Kodes KGy, KGy+1 der Leiteinheit 4 zur Ausgabe auf einem Bildschirm und zur weiteren Analyse und Bewertung des/der Ereignisses/e zugeführt werden.

Darüber hinaus erlaubt das Verfahren, dass bei Start des Verfahrens nur eine vorgegebene Anzahl von Gruppen Gy verwendet werden und keine neuen Gruppen Gy+1 generiert werden. Hierdurch wird zunächst eine robuste Gruppierung neu zu betrachtender numerischer Kodes Kx ermöglicht. Im fortlaufenden Betrieb kann dann die Generierung von neuen Gruppen Gy+1 zugelassen werden.

Obwohl die Erfindung im Detail durch bevorzugte Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen. Insbesondere kann der Protokollkomprimierer 9 an geeigneter Stelle in eine Komponente des Automatisierungssystems 1 implementiert sein.

## Patentansprüche

1. Verfahren zur automatischen Verarbeitung einer Anzahl von Protokolldateien (P1 bis Pn) unterschiedlicher Art eines Automatisierungssystems (1) einer technischen Anlage, umfassend folgende Schritte:
- Ermitteln zumindest eines Nachrichtenteils (N1 bis Nn) eines jeden Datensatzes (D1 bis Dn) einer Protokolldatei (P1 bis Pn) durch
- Verkettung aller Inhalte des jeweiligen Datensatzes (D1 bis Dn) der Protokolldatei (P1 bis Pn),
- Zusammenfassen der Datensätze (D1 bis Dn) aller Protokolldateien (P1 bis Pn) in einer Summendatei (SD),
- Chronologische Sortierung der Datensätze (D1 bis Dn) aller Protokolldateien (P1 bis Pn) in der Summendatei (SD),
- Komprimieren eines jeden Datensatzes (D1 bis Dn) in der Summendatei (SD),
- Kodieren der komprimierten Datensätze (D1 bis Dn) in der Summendatei (SD) durch mindestens einen oder mehrere numerische, alphabetische oder alphanumerische Kodes (Kx),
- Sortieren und Zuordnen der komprimierten Datensätzen (D1 bis Dn) anhand des/der ermittelten numerischen, alphabetischen oder alphanumerischen Kodes (Kx) zu mindestens einer Gruppe (Gy) mit einem zugehörigen Gruppen-Kode (KGy), und
- Dekodieren des Gruppen-Kodes (KGy) der zugeordneten Gruppe (Gy) und Ausgabe des dekodierten Gruppen-Kodes (KGy) als alphanumerischen Nachrichtenteil (N1 bis Nn) der Protokolldatei (P1 bis Pn), und
- Hinterlegung des alphanumerischen Nachrichtenteils (N1 bis Nn) der Protokolldatei (P1 bis Pn) in einem Speicher (10).

2. Verfahren nach Anspruch 1, wobei beim Komprimieren der Datensätze (D1 bis Dn) diese derart verarbeitet werden, dass zumindest die Datenlänge und/oder der Dateninhalt des jeweiligen Datensatzes (D1 bis Dn) reduziert werden/wird.

3. Verfahren nach Anspruch 2, wobei für in einem Datensatz (D1 bis Dn) enthaltene Sonderzeichen automatisch Leerzeichen eingesetzt werden und bei daraus resultierenden mindestens zwei oder mehreren, aufeinanderfolgenden Leerzeichen eine über ein einzelnes Leerzeichen hinausgehende Anzahl von aufeinanderfolgenden Leerzeichen aus dem Datensatz (D1 bis Dn) entfernt wird.

4. Verfahren nach einem der vorhergehenden Ansprüche, wobei die Verkettung der Inhalte des jeweiligen Datensatzes (D1 bis Dn) aufgelöst wird und daraus resultierende separate alphanumerische Inhalte mit weniger als vier Zeichen entfernt werden.

5. Verfahren nach Anspruch 4, wobei die separaten alphanumerischen Inhalte derart analysiert und vereinheitlicht werden, dass jedem separaten alphanumerischen Inhalt ein Referenzwort (Rx) und jedem Referenzwort (Rx) ein numerischer Kode (Kx) zugeordnet werden.

6. Verfahren nach Anspruch 5, wobei die Summendatei (SD) mit den separaten alphanumerischen Inhalten anhand der ermittelten Referenzwörter (Rx) und/oder des/r numerischen Kode/s (Kx) in eine zweidimensionale, insbesondere alphanumerische Kode-Matrix (KM) umgewandelt wird.

7. Verfahren nach Anspruch 6, wobei die numerischen Kodes (Kx) der zweidimensionalen Kode-Matrix (KM) chronologisch und/oder in Abhängigkeit von der jeweiligen Zeichenlänge sortiert werden.

8. Verfahren nach Anspruch 6 oder 7, wobei ähnliche numerische Kodes (Kx) der Kode-Matrix (KM) mittels einer Ähnlichkeitsoperation, insbesondere der so genannten Levenshtein-Distanz, gruppiert werden.

9. Verfahren nach Anspruch 8, wobei bei einer Levenshtein-Distanz von Null für einen zu betrachtenden numerischen Kode (Kx) zu einer der Gruppen (Gy) dieser zu betrachtende numerische Kode (Kx) dieser einen Gruppe (Gy) zugeordnet wird.

10. Verfahren nach Anspruch 8 oder 9, wobei bei einer Levenshtein-Distanz von eins für einen zu betrachtenden numerischen Kode (Kx) zu einer der Gruppen (Gy) und bei einer Unterscheidung des zu betrachtenden numerischen Kodes (Kx) nur an einer Stelle von zumindest einer der Gruppen (Gy) dieser zu betrachtende numerische Kode (Kx) der zumindest einen Gruppe (Gy) zugeordnet wird.

11. Verfahren nach einem der vorhergehenden Ansprüche, wobei jeder neu zu betrachtende numerische Kode (Kx) mit nichtgruppierten numerischen Kodes (Kx) gleicher Länge oder mit einer größeren Länge von maximal einem Zeichen verglichen wird.

12. Verfahren nach Anspruch 11, wobei, wenn die Levenshtein-Distanz eines zu betrachtenden numerischen Kodes (Kx) zu einem anderen nicht-gruppierten numerischen Kode (Kx) gleich eins ist, dann wird eine neue Gruppe (Gy+1) aus beiden numerischen Kodes (Kx) derart gebildet, dass
- bei einer unterschiedlichen Länge der beiden zu betrachtenden numerischen Kodes (Kx) der neuen Gruppe (Gy+1) der kürzere numerische Kode (Kx) zugeordnet wird oder
- bei gleicher Länge der beiden numerischen Kodes (Kx) mit mindestens einem unterschiedlichen Zeichen der neuen Gruppe (Gy+1) der numerischen Kode (Kx) ohne das unterschiedliche Zeichen zugeordnet wird.

13. Verfahren nach einem der vorhergehenden Ansprüche, wobei, wenn ein zu betrachtender numerischer Kode (Kx) identifiziert wird, der nicht eine Levenshtein-Distanz von gleich eins zu einem anderen nicht-gruppierten numerischen Kode (Kx) aufweist, dieser zu betrachtende numerische Kode (Kx) einer neuen Gruppe (Gy+1) zugeordnet wird.

14. Verwendung des Verfahrens nach einem der Ansprüche 1 bis 13 in einem Automatisierungssystem (1) einer technischen Anlage.

15. Automatisierungssystem (1) einer technischen Anlage, umfassend mindestens eine Bedien- und Beobachtungsebene (BB), eine Automatisierungsebene (AS) und eine Feldebene (FE), die miteinander über ein Kommunikationssystem verbunden sind, wobei in mindestens einer der Ebenen das Verfahren nach einem der Ansprüche 1 bis 13 implementiert ist.

## Claims

1. Method for automatically processing a number of log files (P1 to Pn) of different types of an automation system (1) of a technical facility, comprising the following steps:
- Determining at least one message part (N1 to Nn) of each data set (D1 to Dn) of a log file (P1 to Pn) by:
- Concatenating all the contents of the respective data set (D1 to Dn) of the log file (P1 to Pn),
- Summarising the data sets (D1 to Dn) of all log files (P1 to Pn) in a summary file (SD),
- Chronological sorting of the data sets (D1 to Dn) of all log files (P1 to Pn) in the summary file (SD),
- Compressing each data set (D1 to Dn) in the summary file (SD),
- Coding the compressed data sets (D1 to Dn) in the summary file (SD) by at least one or more numeric, alphabetic or alphanumeric code(s) (Kx),
- Sorting and assigning the compressed data sets (D1 to Dn), on the basis of the numeric, alphabetic or alphanumeric code(s) (Kx) established, to at least one group (Gy) with an associated group code (KGy), and
- Decoding the group code (KGy) of the assigned group (Gy) and output of the decoded group code (KGy) as alphanumeric message part (N1 to Nn) of the log file (P1 to Pn), and
- Storage of the alphanumeric message part (N1 to Nn) of the log file (P1 to Pn) in a memory (10).

2. Method according to claim 1, wherein, during compression of the data sets (D1 to Dn), these are processed such that at least the data length and/or the data content of the respective data set (D1 to Dn) is/are reduced.

3. Method according to claim 2, wherein spaces are inserted automatically for special characters contained in a data set (D1 to Dn) and for at least two or more consecutive spaces resulting therefrom, a number of consecutive spaces extending beyond a single space is removed from the data set (D1 to Dn).

4. Method according to one of the preceding claims, wherein the concatenation of the contents of the respective data set (D1 to Dn) is resolved and the separate alphanumeric contents resulting therefrom with fewer than four characters are removed.

5. Method according to claim 4, wherein the separate alphanumeric contents are analysed and unified such that each separate alphanumeric content is assigned a reference word (Rx) and each reference word (Rx) is assigned a numeric code (Kx) .

6. Method according to claim 5, wherein the summary file (SD) with the separate alphanumeric contents is converted on the basis of the reference words (Rx) and/or the numeric code(s) (Rx) established, into a two-dimensional, especially alphanumeric code matrix (KM).

7. Method according to claim 6, wherein the numeric codes (Kx) of the two-dimensional code matrix (KM) are sorted chronologically and/or as a function of the respective character length.

8. Method according to claim 6 or 7, wherein similar numeric codes (Kx) of the code matrix (KM) are grouped by means of a similarity operation, especially the so-called Levenshtein distance.

9. Method according to claim 8, wherein for a Levenshtein distance to one of the groups (Gy) of zero for a numeric code (Kx) to be considered, this numeric code (Kx) to be considered is assigned to this one group (Gy).

10. Method according to claim 8 or 9, wherein for a Levenshtein distance to one of the groups (Gy) of one for a numeric code (Kx) to be considered and for a difference of the numeric code (Kx) to be considered at only one digit from at least one of the groups (Gy), this numeric code (Kx) to be considered is assigned to the at least one group (Gy).

11. Method according to one of the preceding claims, wherein each new numeric code (Kx) to be considered is compared with non-grouped numeric codes (Kx) of the same length or with a greater length of a maximum of one character.

12. Method according to claim 11, wherein, if the Levenshtein distance of a numeric code (Kx) to be considered to another non-grouped numeric code (Kx) is equal to one, then a new group (Gy+1) is formed from the two numeric codes (Kx) such that
- if the two numeric codes (Kx) to be considered are of different lengths, the new group (Gy+1) is assigned the shorter numeric code (Kx), or
- if the two numeric codes (Kx) are the same length with at least one different digit, the new group (Gy+1) is assigned the numeric code (Kx) without the different digit.

13. Method according to one of the preceding claims, wherein, when a numeric code (Kx) to be considered is identified that does not have a Levenshtein distance to another non-grouped numeric code (Kx) equal to one, this numeric code (Kx) to be considered is assigned to a new group (Gy+1).

14. Use of the method according to one of claims 1 to 13 in an automation system (1) of a technical facility.

15. Automation system (1) of a technical facility comprising at least an operation and monitoring level (BB), an automation level (AS) and a field level (FE) that are connected to one another via a communication system, wherein the method according to one of claims 1 to 13 is implemented in at least one of the levels.

## Revendications

1. Procédé de traitement automatique d'un certain nombre de fichiers (P1 à Pn) journaux de type différent d'un système (1) d'automatisation d'une installation technique, comprenant les stades suivants :
- détermination d'au moins une partie (N1 à Nn) de message de chaque jeu (D1 à Dn) de données d'un fichier (P1 à Pn) journal par
- concaténation de tous les contenus du jeu (D1 à Dn) de données du fichier (P1 à Pn) journal,
- rassemblement des jeux (D1 à Dn) de données de tous les fichiers (P1 à Pn) journaux dans un fichier (SD) somme,
- tri chronologique des jeux (D1 à Dn) de données de tous les fichiers (P1 à Pn) journaux dans le fichier (SD) somme,
- compression de chaque jeu (D1 à Dn) de données dans le fichier (SD) somme,
- codage des jeux (D1 à Dn) de données comprimées dans le fichier (SD) somme par au moins un ou plusieurs codes (Kx) numériques, alphabétiques ou alphanumériques,
- tri et affectation des jeux (D1 à Dn) de données comprimées à l'aide du/des code(s) (Kx ) numériques, alphabétiques ou alphanumériques déterminés à au moins un groupe (Gy) ayant un code (Kgy) de groupe associé, et
- décodage du code (Kgy) de groupe du groupe (Gy) associé et émission du code (Kgy) de groupe décodé comme partie (N1 à Nn) de message alphanumérique du fichier (P1 à Pn) journal, et
- mise en mémoire de la partie (N1 à Nn) de message alphanumérique du fichier (P1 à Pn) journal dans une mémoire (10).

2. Procédé suivant la revendication 1, dans lequel, lors de la compression des jeux (D1 à Dn) de données, on les traite de manière à réduire au moins la longueur des données et/ou le contenu des données du jeu (D1 à Dn) de chaque jeu (D1 à Dn) de données.

3. Procédé suivant la revendication 2, dans lequel on utilise des caractères vides automatiquement pour des signes particuliers contenus dans un jeu (D1 à Dn) de données et, s'il s'ensuit au moins deux ou plusieurs caractères vides successifs, on élimine un nombre allant au-delà d'un caractère vide individuel de caractères vides successifs du jeu (D1 à Dn) de données.

4. Procédé suivant l'une des revendications précédentes, dans lequel on résout la concaténation des contenus de chaque jeu (D1, Dn) de données et on élimine des contenus alphanumériques distincts en résultant ayant moins de quatre caractères.

5. Procédé suivant la revendication 4, dans lequel on analyse et on unifie les contenus alphanumériques distincts, de manière à associer un mot (Rx) de référence à chaque contenu alphanumérique distinct et un code (Kx) numérique à chaque mot (Rx) de référence.

6. Procédé suivant la revendication 5, dans lequel le fichier (SD) somme ayant les contenus alphanumériques distincts est transformé à l'aide des mots (Rx) de référence déterminés et/ou du ou des codes (Kx) numérique en une matrice-code (KM) bidimensionnelle, notamment alphanumérique.

7. Procédé suivant la revendication 6, dans lequel les codes (Kx) numériques de la matrice-code (KM) bidimensionnelle sont triés chronologiquement et/ou en fonction de la longueur des caractères.

8. Procédé suivant la revendication 6 ou 7, dans lequel des codes (Kx) numériques semblables de la matrice-code (KM) sont regroupés au moyen d'une opération de similitude, notamment de ce que l'on appelle la distance de Levenshtein.

9. Procédé suivant la revendication 8, dans lequel, pour une distance de Levenshtein de zéro, pour un code (Kx) numérique à considérer, par rapport à l'un des groupes (Gy), ce code (Kx) numérique à considérer est affecté à ce un groupe (Gy).

10. Procédé suivant la revendication 8 ou 9, dans lequel, pour une distance de Levenshtein de un, pour un code (Kx) numérique à considérer, par rapport à l'un des groupes (Gy), et pour une différence du code (Kx) numérique à considérer, seul en un point du au moins l'un des groupes (Gy), ce code (Kx) numérique à considérer est affecté au au moins un groupe.

11. Procédé suivant l'une des revendications précédentes, dans lequel chaque nouveau code (Kx) numérique à considérer est comparé à un code (Kx) numérique non regroupé de même longueur ou de longueur plus grande qu'un caractère au maximum.

12. Procédé suivant la revendication 11, dans lequel, si la distance de Levenshtein d'un code (Kx) numérique à considérer, par rapport à un autre code (Kx) numérique non regroupé, est égale à un, on forme un nouveau groupe (Gy+1) composé de deux codes (Kx) numériques, de manière
- à ce que, pour une longueur différente des deux codes (Kx) numériques à considérer, le code (Kx) numérique le plus court soit affecté au nouveau groupe (Gy+1) ou
- si les deux codes (Kx) numériques ont la même longueur, en ayant au moins un caractère différent, le code (Kx) numérique, sans le caractère différent, est affecté au nouveau groupe (Gy+1).

13. Procédé suivant l'une des revendications précédentes, dans lequel, s'il est identifié un code (Kx) numérique à identifier, qui n'a pas une distance de Levenshtein égale à un, par rapport à un autre code (Kx) numérique non regroupé, ce code (Kx) numérique à considérer est affecté à un nouveau groupe (Gy+1).

14. Utilisation du procédé suivant l'une des revendications 1 à 13 dans un système (1) d'automatisation d'une installation technique.

15. Système (1) d'automatisation d'une installation technique, comprenant au moins un plan (BB) de service et d'observation, un plan (AS) d'automatisation et un plan (FE) de champ, qui sont reliés entre eux par un système de communication, dans lequel, dans au moins l'un des plans, le procédé suivant l'une des revendications 1 à 13 est mis en oeuvre.
